## Europäisches Patentamt
## European Patent Office
## Office européen des brevets

(11) Numéro de publication: **0 023 267**
**B1**

(12)
# FASCICULE DE BREVET EUROPEEN

(45) Date de publication du fascicule du brevet: **30.05.84**

(51) Int. Cl.³: **G 06 F 3/12**

(21) Numéro de dépôt: **80103541.1**

(22) Date de dépôt: **24.06.80**

(54) **Dispositif de commande d'imprimante.**

(30) Priorité: **30.07.79 US 62254**

(43) Date de publication de la demande:
**04.02.81 Bulletin 81/05**

(45) Mention de la délivrance du brevet:
**30.05.84 Bulletin 84/22**

(84) Etats contractants désignés:
**BE CH DE FR GB LI NL**

(56) Documents cités:
**FR-A-2 073 120**
**US-A-4 037 208**

**PROCEEDINGS OF THE IEEE, vol. 64, no. 6, juin 1976, pages 960-965 New York, U.S.A. R.E. JACKSON: "Microprocessor control for a high-speed serial printer"**
**IBM TECHNICAL DISCLOSURE BULLETIN, vol. 21, no. 7, décembre 1978, pages 2891-2896 New York, U.S.A. T.H. LONG JR.: "Grating symmetry measurement"**

(73) Titulaire: **International Business Machines Corporation**
**Old Orchard Road**
**Armonk, N.Y. 10504 (US)**

(72) Inventeur: **Jackson, Timothy**
**8582 NW 20th Court**
**Coral Springs Florida 33065 (US)**
Inventeur: **Malkemes, Charles David**
**783 Coventry Street**
**Boca Raton Florida 33431 (US)**
Inventeur: **Zipoy, William Lewis**
**1423 SW 13th Drive**
**Boca Raton Florida 33432 (US)**

(74) Mandataire: **Colas, Alain**
**Compagnie IBM France Département de Propriété Industrielle**
**F-06610 La Gaude (FR)**

Courier Press, Leamington Spa, England.

## Description

Domaine technique

La présente invention concerne un dispositif de commande d'imprimantes et plus particulièrement des moyens logiques de commande d'imprimantes utilisant des moyens processeurs à interruptions pour commander une unité de chronologie qui contrôle les éléments d'impression d'une imprimante à matrice.

Etat de la technique antérieure

Les imprimantes à matrice, telles que les imprimantes à matrice de fils, les imprimantes à jet d'encre et les imprimantes thermiques sont bien connues dans l'art antérieur. Parmi les plus courantes, on connaît l'imprimante à matrice de fils qui comporte une tête d'impression à plusieurs fils, par exemple huit, disposés selon une colonne verticale sur la tête d'impression. L'imprimante comporte des moyens assurant le mouvement latéral de la tête d'impression sur un milieu d'enregistrement tel que du papier, qui a été introduit dans l'imprimante.

Chacun des fils d'impression de la tête comporte un dispositif associé de commande de déplacement du fil, tel qu'un solénoïde, connecté à l'extrêmité du fil opposée au papier. Ces dispositifs de commande peuvent être excités pour provoquer le mouvement vers l'avant des fils d'impression. En plaçant un ruban encreur entre les fils et le milieu d'enregistrement, on peut imprimer des points sur celui-ci chaque fois qu'un dispositif de commande est excité. Par l'excitation sélective de dispositifs de commande appropriés, lorsque la tête d'impression parcourt transversalement le papier, des informations telles que des caractères alpha-numériques ou des informations graphiques peuvent être imprimées sur le milieu d'enregistrement d'un manière bien connue de l'homme de l'art.

Tandis que la tête d'impression se déplace latéralement sur le milieu d'enregistrement, des signaux de commande sont générés par le système émetteur de l'imprimante pour indiquer le sens du déplacement de la tête d'impression et sa position précise sur sa trajectoire. Ces signaux générés par le système émetteur sont détectés par les circuits de commande et peuvent être utilisés pour disposer les points imprimés selon des configurations désirées. En général, un signal est généré par le système émetteur à chaque pas de 0,25 millimètre de la tête d'impression sur sa trajectoire et les points sont imprimés en réponse à ces signaux pour assurer l'alignement vertical des caractères d'une ligne à l'autre.

Dans les circuits de commande des imprimantes de l'art antérieur, des microprocesseurs utilisent des techniques d'appel sélectif pour détecter les signaux générés par le système émetteur, c'est-à-dire que le microprocesseur contrôle continuellement les signaux générés par le système émetteur, à la recherche d'une nouvelle impulsion. A la détection d'une nouvelle impulsion, le microprocesseur transmet des signaux pour provoquer l'excitation des dispositifs de commande ou d'actionnement de fil d'impression appropriés. Afin de maintenir un espacement inter-caractères égal et un bon alignement vertical des caractères d'une ligne à l'autre, et particulier dans les imprimantes dans lesquelles une rangée de caractères est imprimée au cours d'un déplacement de gauche à droite de la tête d'impression et une deuxième rangée différente de caractères lors du déplacement suivant de droite à gauche de la tête d'impression, il est nécessaire d'exercer une commande extrêmement précise de l'excitation des dispositifs d'actionnement des fils d'impression. Ceci entraîne l'introduction d'un court retard entre la détection réelle d'un signal généré par le système émetteur et l'application d'un signal aux dispositifs d'actionnement. Ce retard correspond, dans les dispositifs de l'art antérieur, au fait qu'on laisse s'écouler un certain temps, correspondant à un certain nombre de cycles du microprocesseur, avant d'appliquer les signaux aux dispositifs d'actionnement. Des moyens de commande du type décrit ici sont présentés en détail dans le brevet FR—A— 2 374 691 déposé par la demanderesse le 27 octobre 1977.

De même, l'article "Microprocessor Control for a High-Speed Serial Printer" de Robert E. Jackson, paru dans la revue Proceedings of the IEEE, Vol. 64, No. 6, juin 1976, décrit une imprimante fonctionnant sous le contrôle d'un microprocesseur et dans laquelle les signaux générés par le système émetteur sont contrôlés continuellement. Le microprocesseur engendre des signaux de commande, après un laps de temps prédéterminé, vers l'imprimante.

L'un des problèmes précédemment rencontrés lors de l'utilisation de microprocesseurs dans les unités de commande d'imprimantes, réside dans la puissance perdue dans les microprocesseurs. Cette perte de puissance importante est provoquée d'un part, par l'appel sélectif continu du système émetteur de l'imprimante nécessaire à la recherche des signaux générés par le système émetteur, et d'autre part, par l'utilisation du temps correspondant au déroulement d'un certain nombre de cycles du microprocesseur, pour introduire le retard approprié avant l'application des signaux aux dispositifs d'actionnement.

Exposé de l'invention

La présente invention, qui est définit dans la revendication 1, permet de réaliser un dispositif de commande d'imprimante à tête d'impression à matrice, cette tête se déplaçant sur un milieu d'enregistrement. L'impression d'informations sur le milieu d'enregistrement est provoquée par la commande, ou actionnement, sélectif des éléments d'impression de la tête d'impression. Le dispositif de commande comprend des moyens émetteurs délivrant des signaux de position indiquant des positions intermédiaires, périodiques et déterminées lorsque la tête d'impresion se déplace devant le milieu d'enregistrement, des moyens processeurs comportant au moins une première et une seconde entrées d'interruption, une unité de chronologie contrôlée par les moyens processeurs, des moyens logiques de décodage qui, pour chaque signal émis par les moyens émetteurs, appliquent un signal d'interruption à la première entrée d'interruption des moyens processeurs, ces derniers étant programmés pour que, en réponse à ce signal d'interruption, ils émettent des signaux d'actionnement sur l'unité de chronologie pour qu'elle délivre, après un laps de temps prédéterminé, un signal sur la seconde entrée d'interruption des moyens processeurs et pour que, en réponse au signal reçu sur la seconde entrée d'interruption, ils émettent des signaux de commande sélective des éléments d'impression.

Les objets caractéristiques et avantages de l'invention telle que définie dans la revendication 1 ressortiront mieux de l'exposé qui suit fait en référence aux dessins annexés à ce texte et qui représentent un mode de réalisation préféré de celle-ci.

Brève description des figures

La Figure 1 est une représentation schématique d'une imprimante utilisant la présente invention.

La Figure 2 représente le fonctionnement du système émetteur de la Figure 1.

La Figure 3 représente l'impression des points sur un milieu d'enregistrement obtenue en utilisant les informations générées par le système émetteur de l'imprimante.

La Figure 4 montre la nécessité d'attendre l'écoulement d'un temps Δt avant de générer un signal d'actionnement.

La Figure 5 est une représentation schématique de l'unité de commande d'imprimante de la présente invention.

La Figure 6 est une représentation de l'unité logique d'interruption et d'état du système émetteur de la Figure 5.

La Figure 7 est une représentation de l'unité logique du moteur de tête d'impression de la Figure 5.

Description de l'invention

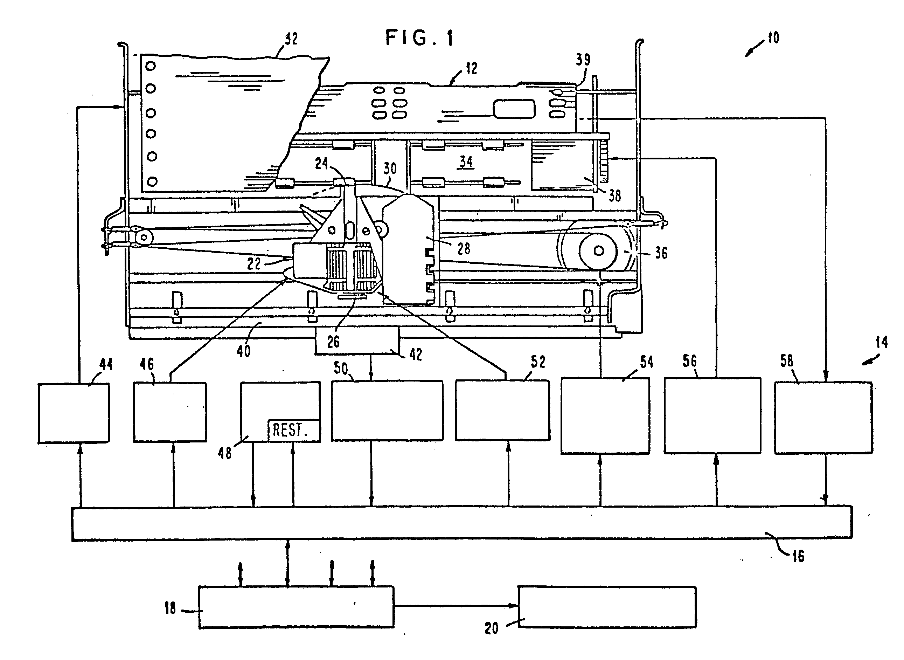

La Figure 1 représente un système d'impression 10 qui comprend une imprimante 12 et son système électronique 14. Une unité logique de commande d'imprimante 16, couplée par l'intermédiaire de l'unité de commande d'entrée/sortie (E/S) 18 à un processeur principal 20, est en outre associée au système d'impression 10. L'imprimante 12 peut être une imprimante à matrice de fils IBM, modèle 3715 modifié. Le processeur principal 20 peut être un processeur IBM, série 1, dont plusieurs modèles sont disponibles sur le marché. L'unité de commande d'entrée/sortie 18 est une unité de commande de type connu permettant au processeur 20 de travailler avec plusieurs imprimantes. L'imprimante 12 est modifiée par rapport au modèle 3715 par un montage d'une tête d'impression basculante 22. Cette tête d'impression comporte une matrice de fils classique qui peut être basculée sur un angle correspondant à la moitié de la distance centre à centre séparant les fils d'impression afin de permettre l'impression entre les points précédemment imprimés. Cette tête est du type comportant huit fils alignés verticalement sur son côté avant 24. Chacun des fils comporte un dispositif d'actionnement associé disposé sur le côté arrière 26 de la tête et qui est excité par des signaux appropriés issus du système électronique 14 de l'imprimante pour propulses son fil associé vers l'avant. Ce mouvement avant du fil associé entraîne le ruban 30, disposé à l'avant de la tête 22, et l'applique sur le milieu d'enregistrement 32 disposé sur la platine 34. Lorsque le fil revient en position de repos, un point a été imprimé sur le milieu d'enregistrement 32.

La tête d'impression 22 est commandée par un moteur pas à pas 36 et peur se déplacer soit de la gauche vers la droite, soit de la droite vers la gauche, devant le milieu d'enregistrement 32. Pendant ce mouvement, des dispositifs d'actionnement appropriés peuvent être excités pour provoquer l'impression de points sur le milieu d'enregistrement 32. Celui-ci est entraîné vers l'avant par un moteur pas à pas 38 pour assurer les opérations d'interlignage. Lorsque le milieu 32 est en mouvement, des signaux sont générés par le système émetteur du dispositif d'alimentation du papier 39 d'une manière bien connue de l'homme de l'art.

L'imprimante 12 comprend également un système de repérage des positions d'impression, ou système émetteur, classique comprenant un ensemble émetteur 40 et un ensemble détecteur 42. L'ensemble émetteur 40 peut être formé d'un série d'éléments disposés très proches l'un de l'autre sur toute la longueur de la trajectoire de la tête d'impression 22. Le détecteur 42, qui est couplé à la tête d'impression 22 et se déplace avec elle le long de l'ensemble émetteur 40, délibre un signal à chaque pas de la tête d'impression 22. Autrement dit, lorsque la tête d'impression 22 passe d'une position intermédiaire à la suivante, le détecteur 42 délivre un signal. Les éléments de l'ensemble émetteur 40 qui peuvent être détectés, sont, par exemple, séparés les uns des autres par une distance de 0,75 mm. L'ensemble détecteur 42 peut être composé de trois détecteurs séparés et agencés de façon à délivrer un signal à chaque incrément de 0,25 mm de la tête d'impression 22 et du détecteur 42 le long de l'ensemble émetteur 40.

Le système électronique 14 de l'imprimante comprend une commande de ventilation 44, une commande de soulèvement 46, une unité d'état d'imprimante 48, un amplificateur de système émetteur et de marge gauche 50, des commandes de fils d'impression 52, une commande 54 du moteur pas à pas de la tête d'impression, une commande 56 du moteur pas à pas d'alimentation du papier et un amplificateur 58 du système de repérage de la position du papier, ou système émetteur du dispositif d'alimentation du papier. Chacun de ces circuits 44 à 58 (numéros pairs seulement) délivre des signaux à l'unité logique de commande d'imprimante 16, ou en reçoit, et commande une partie spécifique de l'imprimante 12 d'une manière bien connue de l'homme de l'art. Par exemple, la commande 44 de ventilation reçoit un signal de l'unité logique de commande 16 de l'imprimante et délivre un signal à l'imprimante 12 pour mettre en route ou couper la ventilation suivant le signal reçu de la logique 16. L'amplificateur du système émetteur de l'imprimante et de marge gauche 50 reçoit des signaux du détecteur 42 et délivre des signaux à l'unité logique de commande d'imprimante 16. Les autres circuits 44 à 58 (numéros pairs seulement) fonctionnent d'une manière similaire et bien connue pour commander diverses parties de l'imprimante 12.

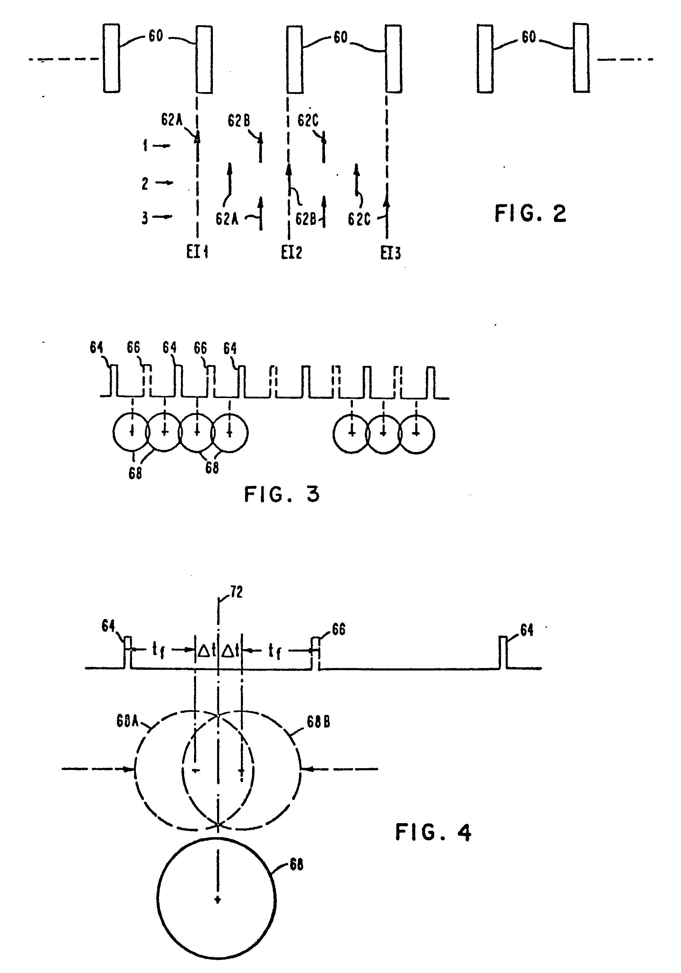

On décrira maintenant le fonctionnement du système émetteur 40 de l'imprimante et du détecteur 42 en se reportant à la Figure 2. Les éléments 60 formant l'ensemble émetteur sont séparés d'une distance de 0,75 mm. L'ensemble détecteur 42 comprend trois éléments de saisie de données 62a, 62b et 62c qui sont séparés d'un distance telle que pour chaque incrément de 0,25 mm de la tête d'impression 22, un seul des éléments de saisie 62a, 62b, 62c est aligné avec l'un des éléments 60 formant l'ensemble émetteur. En d'autres termes, chaque élément de saisie 62a, 62b, 62c est séparé du suivant par N fois la distance séparant les éléments 60 formant l'ensemble émetteur plus 0,5 mm, N étant un nombre entier quelconque. La Figure 2 montre schématiquement que lorsque l'on choisit N=0, les éléments de saisie 62a, 62b et 62c sont séparés par une distance de 0,5 mm bien qu'en pratique, on ne dispose pas ces éléments d'une manière aussi serrée. La Figure 2 représente trois positions référencées 1, 2 et 3 de l'ensemble détecteur 42, et donc, de la tête d'impression 22. En position 1, l'élément de saisie 62a est aligné avec l'un des éléments 60 de l'ensemble émetteur, ce qui provoque la génération d'un signal EMETTEUR D'IMPRESSION 1 (EI1) par le détecteur 42. Les deux autres éléments de saisie 62b et 62c ne sont alignés avec aucun des autres éléments 60 de l'ensemble émetteur et donc ne délivrent aucun signal. A la position 2 qui indique un mouvement de la tête d'impression 22 de 0,25 mm vers la droite, l'élément de saisie 62b est aligné avec l'un des éléments 60 de l'ensemble émetteur, ce qui provoque la génération du signal EMETTEUR D'IMPRESSION 2 (EI2) par le détecteur 42. A la position 3 qui représente un deuxième incrément de 0,25 mm de la tête d'impression vers la droite, l'élément de saisie 62c est aligné avec l'un des éléments 60 de l'ensemble émetteur, ce qui provoque la génération du signal EMETTEUR D'IMPRESSION 3 (EI3). Ce procédé se répète continuellement, ce qui fait que l'un des signaux EMETTEUR D'IMPRESSION EI 1, 2 ou 3 est généré par le détecteur 42 à chaque pas de 0,25 mm de la tête d'impression 22. Ces signaux peuvent être utilisés par le système logique de commande d'imprimante 16 comme signaux de chronologie pour déterminer l'instant d'impression des points sur le milieu d'enregistrement 32, et aussi en observant l'ordre dans lequel ils sont générés, pour déterminer le sens du mouvement de la tête d'impression 22.

La Figure 3 représente l'impression de points obtenue en réponse aux signaux EI 1, 2 et 3 générés par le système émetteur de l'imprimante. Dans la Figure 3, l'impulsion 64 générée par l'émetteur est représentée en traits pleins tandis que la pseudo-impulsion 66 générée par l'émetteur est représentée en tirets entre chaque impulsion réelle 64. Lors de l'impression des points 68, des points adjacents sont imprimés pour se chevaucher légèrement dans l'un des modes d'impression du système d'impression 10. Une méthode appropriée d'impression de points par le système d'impression 10 consiste à imprimer les points à des emplacements désirés en réponse à chaque impulsion 64 ou pseudo-impulsion 66 générée par le système émetteur de l'imprimante, ce qui provoque un léger chevauchement de ces points et la formation d'une ligne continue.

On notera d'après la Figure 4 que les points 68 peuvent être imprimés lorsque la tête d'impression 22 se déplace de la gauche vers la droite ou de la droite vers la gauche. Un temps déterminé $t_f$ soit s'écouler entre le moment où est envoyé le signal excitant des dispositifs d'actionnement des fils d'impression et le moment où le point réel 68 est imprimé. Ce temps est dû principalement au temps requis pour amener le fil d'impression de sa position de repos contre la platine 34. La Figure 4 montre que le temps $t_f$ correspond à moins de la moitié de la distance séparant une impulsion 64 d'une pseudo-impulsion 66. Ainsi, si la tête d'impression 22 se déplace de la gauche vers la droite et qu'un signal est envoyé pour provoquer l'impression d'un point lors de la détection de l'impulsion 64, un point 68A est imprimé à gauche de l'axe 72 entre les impulsions 64 et 66. D'autre part, si la tête d'impression 22 se déplace de la droite vers la gauche, le point 68B sera imprimé à la droite de l'axe 72. Afin d'obtenir l'impression d'un point 68 centré sur l'axe 72, un temps $\Delta t$ doit s'écouler entre la détection de l'une des impulsions 64 ou 66 et l'application d'un signal d'excitation aux dispositifs d'actionnement des fils d'impression de la tête 22.

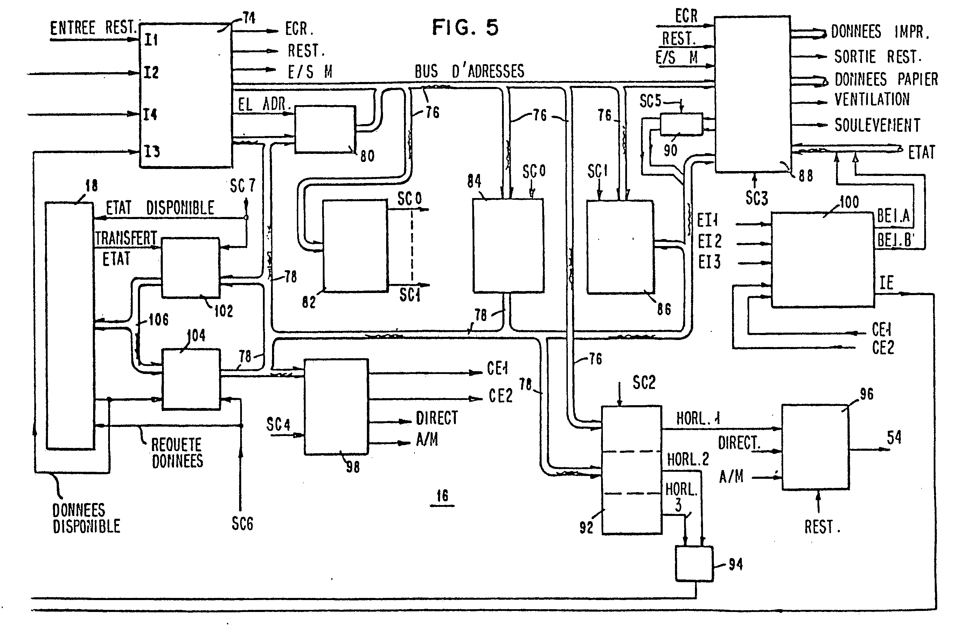

La Figure 5 est une représentation schématique détaillée de l'unité logique de commande d'imprimante 16 qui comprend le microprocesseur 74 qui peut être, par exemple, un microprocesseur Intel 8085. On pourra trouver la description du microprocesseur 74 dans le manuel d'utilisation du MCS-85 ("MCS-85 Users Manual") de janvier 1978 publié par Intel Corp. Le microprocesseur 74 est un microprocesseur à interruptions comportant quatre entrées d'interruption I1, I2, I3 et I4, ces entrées ayant une priorité décroissante. Normalement, le microprocesseur 74 exécute un programme et délivre des signaux de données et d'adresse d'une manière bien connue. Cependant, si un signal est appliqué à l'une des entrées d'interruption I1, I2, I3 ou I4, l'exécution du programme en cours est alors interrompue et le microprocesseur exécute un programme spécial associé à l'interruption particulière qui a été introduite. Le microprocesseur 74 délivre aussi un signal d'écriture ECR, un signal de restauration REST., un signal entrée/sortie mémoire E/S M et un signal élément logique d'adresse ELADR d'une manère bien connue de l'homme de l'art. De plus, une sortie du microprocesseur 74 est couplée au bus d'adresses 76 et au bus de données 78. Le bus de données 78 est raccordé au bus d'adresses par la bascule 80 qui reçoit le signal ELADR pour former les huit bits d'ordre inférieur du bus d'adresses à seize bits 76.

Le bus d'adresses 76 délivre aes signaux d'adresse à l'unité logique de décodage des signaux de sélection de circuit 82, à la mémoire permanente 84 et à la mémoire à accès aléatoire 86. La logique 82, en réponse à trois des seize lignes du bus d'adresses 76, délivre l'un des huit signaux de sélection de circuit SC0 à SC7. Chacun des signaux SC0 à SC7 est délivré à un module différent de l'unité logique de commande d'imprimante 16 pour permettre à ces modules de répondre à d'autres signaux. Par exemple, le signal SC0 est appliqué à la mémoire permanente 84 pour permettre à celle-ci de répondre aux signaux du bus d'adresses 76 adressant une position particulière de ladite mémoire. La donnée écrite dans cette position adressée est alors appliquée par la sortie de la mémoire 84 au bus de données 78. La mémoire à accès aléatoire 86 fonctionne d'une manière similaire en réponse au signal SC1. Lorsqu'on désire écrire une information dans la mémoire 86, le signal SC1 ainsi que d'autres signaux issus du microprocesseur 74 (non représenté) sont délivrés pour provoquer l'écriture des données portées par le bus de données 78 aux positions adressées dans la mémoire à accès aléatoire 86.

Le bus d'adresses 76 est également couplé à l'unité logique générale 88 qui est conditionnée par le signal SC3, issu de la logique de décodage 82, et assure plusieurs fonctions logiques qui seront décrites plus en détail en se reportant à la Figure 8. Cependant, on notera que la logique 88 correspond tout à fait à celle décrite dans le brevet FR—A—2 374 691 cité précédemment. La logique 88 répond également aux signaux apparaissant sur le bus de données 78 ainsi qu'aux signaux ECR., REST. et E/S Mem. issus du microprocesseur 74. En général, l'unité 88 comprend des éléments logiques qui délivrent les signaux DONNEES IMPRESSION à la commande des fils d'impression 52, les signaux DONNEES PAPIER aux commandes 56 du moteur pas à pas d'alimentation du papier, les signaux VENTILATION et SOULEVEMENT aux commandes 44 et 46 du ventilateur et du dispositif de soulèvement et un signal SORTIE RESTAURATION pour restaurer l'imprimante 12. En outre, la logique 88 répond aux signaux d'état délivrés par l'imprimante 12. Un moyen de transfert 90 est associé à la logique 88 pour transférer deux lignes de la logique 88 au bus de données 78 en réponse au signal de conditionnement SC5. Ces lignes sont utilisées pour lire deux des signaux d'état appliquées en même temps à la logique 88 et pour délivrer ces deux signaux par deux lignes du bus de données 78 en réponse aux signaux d'adresses appropriés appliqués à la logique 88 et au signal E/S Mem.

Le bus d'adresses 76 et le bus de données 78 sont également reccordées à l'unité de chronologie programmable 92 qui est conditionné par le signal SC2 issu de la logique 82 pour répondre aux signaux portés par le bus de données 78 et le bus d'adresses 76. L'unité de chronologie programmable 92 qui peut être, par exemple, une unité Intel 8253, comprend 3 parties qui peuvent être indépendamment programmées selon un certain nombre de modes différents, y compris le mode à retard qui permet de délivrer un signal à un instant déterminé après qu'il ait été programmé et le mode de chronologie en temps réel qui permet la délivrance d'un train continu de signaux ayant une fréquence spécifique, pour lequel le période correspondant à la fréquence est programmée. Dans le case de l'unité de chronologie programmable 92, la première partie ou partie supérieure est programmée pour délivrer le signal HORL. 1 sous la forme d'un train d'impulsions ayant une fréquence spécifique et les deuxième et troisième parties délivrent respectivement les signaux HORL. 2 et HORL. 3 à des instants particuliers après qu'ils aient été programmés.

Les signaux HORL. 2 et HORL. 3 issus des deuxième et troisième parties de l'unité de chronologie programmable 92 sont délivrés sous la forme de deux entrées à la porte OU 94. La sortie de la porte OU 94 est couplée à l'entrée d'interruption I4 du microprocesseur 74 pour lui indiquer qu'il doit commander la délivrance des signaux DONNEES IMPRESSION à l'unité logique 88 afin d'actionner les fils d'impression.

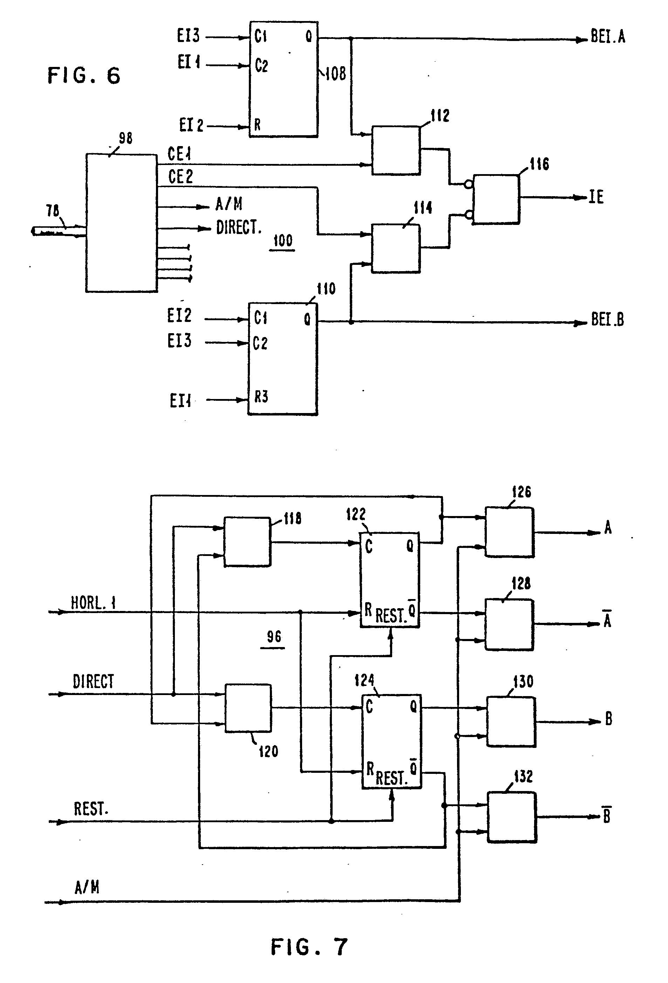

Le signal HORL. 1 issu de l'unité de chronologie programmable 92 sert d'entrée à l'unité
logique 96 du moteur de tête d'impression.
L'unité logique 96 est représentée d'une
manière plus détaillée à la Figure 7. L'unité
logique 96 du moteur de tête d'impression est
également conditionné par les signaux DIRECTION (DIR) ARRET/MARCHE (A/M) et REST. et
délivre des signaux appropriés pour commander
le moteur pas à pas 36 par l'intermédiaire de la
commande 54 du moteur pas à pas de tête
d'impression.

Les signaux DIR. et A/M appliqués à la
logique 96 du moteur de tête d'impression sont
issus de la bascule de données 98 qui répond
au signal SC4 issu de l'unité logique de
décodage 82 et aux signaux issus du bus de
données 78. De plus, les bascules de données
98 délivrent les signals CONDITIONNEMENT
EMETTEUR 1 (CE1) et CONDITIONNEMENT
EMETTEUR 2 (CE2). A la réception du signal
SC4, la bascule de données 98 emmagasine 4
signaux issus du microprocesseur 74 par l'intermédiaire du bus de données 78 et ces signaux
emmagasinés constituent les 4 signaux délivrés
par la bascule de données 98.

Les signaux CONDITIONNEMENT EMETTEUR 1 et CONDITIONNEMENT EMETTEUR 2
issus de la bascule de données 98 sont délivrés
en même temps que les 3 signaux du système
émetteur ET 1, 2 et 3 générés par le système
émetteur 50 de l'imprimante et appliqués à
l'unité logique d'interruption et d'état 100 qui
est représentée plus en détail à la Figure 6. La
logique 100 délivre les signaux BLOCAGE
EMETTEUR IMPRIMANTE A et B (BEI.A et BEI.B)
à l'entrée état de la logique 88. Comme on le
verra ultérieurement, le microprocesseur 74
peut appeler sélectivement la logique 88 pour
obtenir les signaux BEI.A et BEI.B afin de déterminer le sens dans lequel se déplace la tête
d'impression 22. De plus, la logique 100 délivre
un signal INTERRUPTION EMETTEUR (IE) sur
l'entrée d'interruption I2 du microprocesseur
74. Le signal INTERRUPTION EMETTEUR interrompt le microprocesseur 74 après la détection de chaque pas de 0,25 mm de la tête
d'impression 22 afin de provoquer la délivrance
de signaux par le microprocesseur 74 pour programmer les deuxième et troisième parties de
l'unité de chronologie programmable 92. A la
fin des temps programmés de l'unité de
chronologie 92, le signal HORL. 2 ou HORL. 3
est délivré a travers de la porte OU 94 pour
interrompre le microprocesseur 74 et provoquer la délivrance des signaux appropriés au
travers de la logique 88 et l'actionnement des
fils d'impression par le signal DONNEES
IMPRESSION.

L'unité logique de commande d'imprimante
16 est couplée à l'unité de commande
d'entrée/sortie 18 par les bascules de données
102 et 104. La bascule 102 est conditionnée
par le signal SC7 issu de la logique 82 pour
emmagasiner les huit bits des données apparaissant alors sur le bus de données 78. Le
signal SC7 est également appliquée à la
commande d'entrée/sortie 18 sous la forme
d'un signal ETAT DISPONIBLE pour indiquer
que la bascule de données 102 contient un
multiplet de huit bits d'information d'état.
Lorsque la commande d'entrée/sortie 18 est
prête à recevoir l'information d'état, elle renvoie
un signal TRANSFERT ETAT à la bascule 102,
provoquant le transfert des huit bits d'information, emmagasinés dans celle-ci, sur la
commande d'entrée/sortie 18 par l'intermédiaire du bus d'entrée/sortie 106. Les informations peuvent également être envoyées de la
commande E/S 18 au bus de données 78 de la
logique de commande d'imprimante 16 par
l'intermédiaire du bus E/S 106 et de la bascule
de données 104. Cette opération est
commandée par l'unité E/S 18 qui délivre les
données sur le bus E/S 106 tout en générant en
même temps le signal DONNES DISPONIBLES
qui les bloque sur le bus E/S 106 dans la bascule de données 104. En outre, le signal DONNES DISPONIBLES est appliqué à l'entrée
d'interruption I3 du microprocesseur 74 pour
indiquer que la donnée est emmagasinée dans
la bascule 104. Le microprocesseur 74 peut
alors délivrer des signaux appropriés à la
logique 82 provoquant la génération du signal
SC6 et ainsi l'application des données contenues dans la bascule 104 sur le bus de
données 78. Le signal SC6 est également appliqué à la commande E/S 18 sous la forme du
signal REQUETE DONNEES pour indiquer que
des données supplémentaires peuvent être
envoyées à la bascule 104.

La Figure 6 est une représentation plus
détaillée de la bascule de données 98 et de la
logique d'état et d'interruption d'émetteur 100.
La bascule de données 98 peut être une
bascule de données à entrée/sortie de huit bits
classiques tel que, par exemple, le circuit Intel
8212 ou le circuit 74LS374 commercialisé par
Texas Instruments. Les bascules de données
102 et 104 peuvent être du même type. Dans le
cas de la bascule de données 98, quatre lignes
seulement sur huit sont utilisées et elles
peuvent être couplées, par exemple, aux lignes
D0 à D3 du bus de données 78 du côté entrée.
La bascule de données 98 est conditionnée par
le signal SC4 pour recevoir des données du bus
78. Le signal de commande de sortie de la
bascule de données 98 est appliqué pour provoquer la sortie des données contenues dans la
bascule. Ainsi, la bascule de données 98 peut
être programmée en appliquant les signaux
appropriés sur le bus de données 78 au
moment où le signal SC4 est généré. Les
signaux issus de la bascule de données 98 sont
les signaux CONDITIONNEMENT EMETTEUR 1
et 2 envoyés sur la logique d'état et d'interruption d'émetteur 100 et les signaux A/M et
DIRECTION envoyés sur la logique du moteur de
tête d'impression 96 représentée à la Figure 7.
La logique d'état et d'interruption d'émetteur 100 comprend deux bascules 108 et 110, deux portes OU exclusif 112 et 114 et la porte $\overline{OU}$ (porte NOR) 116. Les bascules 108 et 110 peuvent être du type 74LS279 commercialisés par Texas Instruments et comportent deux entrées de conditionnement et une seule entrée de restauration. Chaque fois qu'un signal est appliqué à l'une des entrées de conditionnement des bascules 108 et 110 la sortie Q de celle-ci passe au niveau haut ou au niveau "1" logique. Inversement, chaque fois qu'un signal est appliqué à l'entrée de restauration des bascules 108 ou 110, la sortie Q de celle-ci passe au niveau bas ou "0" logique. Les deux entrées de conditionnement de la bascule 108 reçoivent les signaux ELEMENT EMETTEUR 1 et 3 et l'entrée de restauration de la bascule 108 reçoit le signal ELEMENT EMETTEUR 2. Les deux entrées de conditionnement de la bascule 110 reçoivent les signaux ELEMENT EMETTEUR 2 et 3 et l'entrée de restauration de la bascule 110 reçoit le signal ELEMENT EMETTEUR 1. La sortie Q de la bascule 108 délivre le signal BEI.A et la sortie Q de la bascule 110 délivre le signal BEI.B. Les deux signaux BEI.A et BEI.B sont délivrés ous la forme de deux entrées d'état à la logique 88.

Couplé de cette manière, le signal BEI.A représente un "1" logique depuis l'apparition du signal ELEMENT EMETTEUR 3 jusqu'à l'apparition du signal ELEMENT EMETTEUR 2 suivant. Le signal BEI.A représente un "0" logique depuis l'apparition du signal ELEMENT EMETTEUR 2 jusqu'à l'apparition du signal ELEMENT EMETTEUR 3. Le signal BEI.B représente un "0" logique depuis l'apparition du signal ELEMENT EMETTEUR 1 jusqu'à l'apparition du signal ELEMENT EMETTEUR 2. Le signal BEI.B représente un "1" logique depuis l'apparition du signal ELEMENT EMETTEUR 2 jusqu'à l'apparition du signal ELEMENT EMETTEUR 1 suivant. La séquence d'apparition de ces signaux peut être utilisé par le microprocesseur 74 pour déterminer le sens du mouvement de la tête d'impression 22 d'une manière bien connue de l'homme de l'art.

Le signal BEI.A est appliqué à une entrée de la porte OU exclusif 112 et le signal BEI.B est appliqué à une entrée de la porte OU exclusif 114. La deuxième entrée de la porte OU exclusif 112 reçoit le signal CONDITIONNEMENT EMETTEUR 1 de la bascule de données 98 et la deuxième entrée de la porte OU exclusif 114 reçoit le signal CONDITIONNEMENT EMETTEUR 2 de la bascule de données 98. Les sorties de chacune des portes OU exclusif 112 et 114 sont appliquées aux deux entrées de la porte $\overline{OU}$ 116 dont la sortie délivre le signal INTERRUPTION EMETTEUR (IE) qui est renvoyée à l'entrée interruption I2 du microprocesseur 74. Les signaux CONDITIONNEMENT EMETTEUR 1 et CONDITIONNEMENT EMETTEUR 2 sont délivrés par le microprocesseur 74 au travers de la bascule de données 98 et apparaissent comme un complément des signaux BEI.A et BEI.B, respectivement, bien qu'ils soient décalés au moment où le signal INTERRUPTION EMETTEUR est délivré. A la suite de l'application de ces signaux CONDITIONNEMENT EMETTEUR 1 et 2 aux portes OU exclusif 112 et 114, les sorties de celles-ci délivrent des impulsions représentant un "0" logique chaque fois que les signaux respectifs BEI.A et BEI.B changent d'état. A la suite de l'application des sorties OU exclusif 112 et 114 à la porte $\overline{OU}$ 116, le signal INTERRUPTION EMETTEUR est transformé en une série d'impulsions qui apparaissent chaque fois que la tête d'impression 22 se déplace d'un increment de 0,25 mm, c'est-à-dire qu'une impulsion est délivrée pour chaque signal ELEMENT EMETTEUR 1, 2 ou 3.

La Figure 7 représente la logique 96 du moteur de la tête d'impression. La logique 96 comprend les portes OU exclusif 118 et 120, les bascules 122 et 124 et les portes $\overline{ET}$ 126, 128, 130 et 132. Le signal DIRECTION délivré par la bascule de données 98 est appliqué à l'une des entrées de chacune des portes OU exclusif 118 et 120. La sortie Q de la bascule 122 est appliquée à la deuxième entrée de la porte OU exclusif 120 et la sortie $\overline{Q}$ de la bascule 124 est appliquée à la deuxième entrée de la porte OU exclusif 118. La sortie de la porte OU exclusif 118 est appliquée à l'entrée C de la bascule 122 et la sortie de la porte OU exclusif 120 est appliquée à l'entrée C de la bascule 124. La sortie HORL. 1 de l'unité de chronologie programmable 92 est appliquée à l'entrée d'horloge de chacune des bascules 122 et 124 et le signal REST. généré par le microprocesseur 74 est appliqué à l'entrée de restauration de chacune des bascules 122 et 124. Une entrée de chacune des portes $\overline{ET}$ 126, 128, 130 et 132 reçoit le signal A/M de la bascule de données 98. La sortie Q de la bascule 122 est raccordée à la deuxième entrée de la porte $\overline{ET}$ 126; la sortie Q de la bascule 124 est raccordée à la deuxième entrée de la porte $\overline{ET}$ 130 et la sortie $\overline{Q}$ de la bascule 124 est raccordée à la deuxième entrée de la porte $\overline{ET}$ 132. Les sorties de chacune des portes $\overline{ET}$ 126, 128, 130 et 132 délivrent des signaux A, $\overline{A}$, B et $\overline{B}$ classiques sui sont appliqués aux commandes 54 du moteur pas à pas de la tête d'impression pour assurer le fonctionnement de celui-ci d'une manière bien connue de l'homme de l'art.

Lorsqu'ils sont appliqués de la manière décrite ci-dessus, le signal DIRECTION commande le sens dans lequel le moteur pas à pas 36 entraîne la tête d'impression 22 tandis que le signal A/M conditionne ou déconditionne les portes $\overline{ET}$ 126, 128, 130 et 132 et commande ainsi le fonctionnement du moteur pas à pas 36. La vitesse à laquelle le moteur pas à pas 36 entraîne la tête d'impression 22 est déterminée par la fréquence du signal HORL. 1 délivré par l'unité de chronologie programmable 92. L'accélération au démarrage et le ralentissement à l'arrêt du moteur pas à pas 36 sont commandés par la reprogrammation de la partie supérieure de l'unité de chronologie 92 au début et à la fin de l'entraînement de la tête d'impression 22 par le moteur pas à pas 36. Entre le démarrage et l'arrêt du moteur pas à pas 36, l'unité de chronologie est conditionnée pour générer les signaux HORL. 1 à fréquence constante, ôtant ainsi au microprocesseur 74 la tâche de commander le moteur pas à pas 36.

L'unité logique 88 est pratiquement identique à celle décrite dans le brevet FR—A—2 374 691 cité précédemment (voir particulièrement la Figure 11A). La seule différence entre les deux unités est que la logique 88 ne commande pas le moteur pas à pas 36. Les circuits utilisés dans la logique du brevet cité ci-dessus pour commander le moteur pas à pas 36 sont utilisés dans la logique 88 pour stopper la ventilation chaque fois que la tête d'impression 22 est en position de marge gauche et pour commander le mouvement vertical de la tête d'impression 22 pour permettre l'impression verticale de points entre des points imprimés précédemment.

On reviendra maintenant à la Figure 5 pour une description du fonctionnement de l'unité logique de commande d'imprimante 16. Le processeur principal 20 détermine que l'imprimante doit être mise en vonction (par exemple qu'une ligne d'information doit être imprimée) et emmagasine un bloc de commande de dispositif (BCD) formé de huit mots de seize bits ou de seize multiplets dans la mémoire à double entrée de l'unité de commande E/S 18. Le premier multiplet du bloc de commande de dispositif sera alors envoyé sur le bus E/S 106 et emmagasiné dans la bascule de données 104. Un signal DONNES DISPONIBLE sera, en même temps, envoyé de l'unité de commande E/S 18 à la bascule de données 104 pour bloquer la donnée transmise le bis E/S 106 à la bascule de données 104. Le signal DONNEE DISPONIBLE interrompt également le microprocesseur 74, indiquant que les données issues du processeur principal 20 sont disponibles dans la bascule de données 104.

Le microprocesseur 74 commande alors l'envoi du signal SC6 issu de la logique de décodage 82 ainsi qui le transfert des données, emmagasinées dans la bascule de données 104, vers un emplacement défini de la mémoire à accès aléatoire 86. Le signal SC6 est appliqué à l'unité de commande E/S 18 sous la forme d'un signal REQUETE DONNEES et un deuxième multiplet de données est envoyé sur la bascule de données 104 par le bus E/S 106 et ce processus se répète jusqu'à ce que les seize multiplets de données, définissant les huit mots du bloc BCD, aient été emmagasinés dans la mémoire à accès aléatoire 86. La composition exacte du bloc BCD est indiquée dans le brevet FR—A—2 374 691 cité précédemment et la seule modification apportée par la présente invention est l'addition de l'information indiquant le cas et le moment où la tête d'impression 22 doit être déplacée verticalement, c'est-à-dire soulevée.

Lorsque tous les caractères du bloc BCD ont été transférés de l'unité de commande E/S 18 à l'unité logique de commande d'imprimante 16, le processeur principal 20, dans le cas où les données doivent être imprimées, envoie jusqu'à 132 multiplets d'information à la mémoire à double entrée de l'unité de commande E/S 18 pour indiquer les données à imprimer. L'information est à nouveau transférée de l'unité de commande E/S 18, par l'intermédiaire du bus E/S 106, à la bascule de données 104 et de là, dans la mémoire à accès aléatoire 86 de la manière décrite précédemment. Après le transfert de l'information dans la mémoire à accès aléatoire 86 ou pendant son transfert de l'unité de commande E/S 18 à la mémoire 86, le microprocesseur 74 convertit les données qui définissent les caractères à imprimer en signaux appropriés pour la commande des fils d'impression de la tête 22 et donc, de l'impression de ces caractères. Cette opération peut être effectuée d'une manière connue. La mémoire à accès aléatoire contient donc les données qui définissent le fil d'impression qui doit être actionné.

A cet instant, le microprocesseur 74 met le moteur pas à pas en route en appliquant les signaux DIRECTION et A/M approprié à la bascule de données 98 et en programmant d'une manière adéquate la première partie de l'unité de chronologie programmable 92 de façon que le signal HORL. 1 soit délivré aux instants de mise en route appropriés. L'unité logique du moteur de tête d'impression 96, en réponse aux signaux A/M, DIRECTION et HORL. 1, applique des signaux appropriés à la commande 54 du moteur de tête d'impression qui à son tour délivre des signaux pour commander le moteur de tête d'impression 36. Une fois que le moteur pas à pas 36 a commencé à entraîner la tête d'impression 22, l'unité logique d'état et d'interruption du système émetteur 100, détecte les impulsions ELEMENT EMETTEUR 1, 2 et 3. Le signal INTERRUPTION EMETTEUR est envoyé au microprocesseur d'interruption 74 à la détection de chaque impulsion ELEMENT EMETTEUR. En réponse, le microprocesseur 74 programme les deuxième et troisième parties de l'unité de chronologie programmable 92 pour commander l'impression de deux points entre chaque signal ELEMENT EMETTEUR détecté. La deuxième partie de l'unité de chronologie programmable 92 est programmée pour délivrer le signal HORL. 2 à la fin de l'instant $\Delta t$ de la Figure 4 et la troisième partie de l'unité de chronologie 92 est programmée pour délivrer le signal HORL. 3 à la fin d'une période de $0,005+\Delta t$ seconde afin de provoquer l'impression de points aux emplacements appropriés sur le milieu d'enregistrement 32. Ainsi, après chaque signal du système émetteur, les temps pour imprimer deux points sont programmés dans l'unité de chronologie programmable 92. Ces deux points sont les points qui suivent chaque impulsion du système émetteur 64 et chaque pseudo-impulsion 66 de la Figure 3. Chaque fois que l'un des signaux HORL. 2 et HORL. 3 est appliqué, par l'unité de chronologie programmable 92 et au travers de la porte OU 94, au microprocesseur d'interruption 74, des signaux sont délivrés par le bus d'adresses 76 à l'unité logique 82 pour provoquer l'envoi du multiplet d'information suivant emmagasiné dans la mémoire à accès aléatoire 86, sur l'unité logique 88. Cette dernière, sous la forme des signaux DONNEES IMPRESSION, commande l'actionnement des fils d'impression. Ce processus se poursuit jusqu'à ce que tous les caractères aient été imprimés.

Si le bloc de commande de dispositif indique que le processeur principal 20 désire recevoir certaines informations d'état, le microprocesseur 74 commande à l'unité logique 88 de lire les informations d'état appropriées qu'elle reçoit et de les envoyer, par le bus de données 78, à la bascule de données 102. Cette dernière est conditionnée par le signal SC7 pour recevoir ces informations d'état. Le signal SC7 est également envoyé sur l'unité de commande E/S 18 sous la forme du signal ETAT DISPONIBLE. L'unité de commande E/S 18 délivre alors le signal TRANSFERT ETAT pour conditionner la bascule de données 102 et lit l'information d'état appropriée qui est alors délivrée par le bus E/S 106. Le microprocesseur 74 peut également désirer recevoir l'information d'état et il peut commander l'unité logique 88 pour une présentation similaire de l'information d'état sur le bus de données 78, ce qui permet sa lecture par le microprocesseur.

## Revendications

1. Dispositif de commande d'une imprimante du genre comportant une tête d'impression (22) à matrice de fils qui se déplace devant un milieu d'enregistrement (32), la matrice de fils comprenant plusieurs fils d'impression qui peuvent être actionnés lors du déplacement de la tête (22), chaque fil, lorsqu'il est actionné, appliquant un ruban (30) contre le milieu d'enregistrement (32) pour y imprimer un signe, ladite imprimante comportant en outre des moyens émetteurs d'impression (40, 42) le long desquels se déplace la tête d'impression (22), des moyens émetteurs (40, 42) émettant un signal pour chaque pas successif qu'effectue la tête d'impression (22) lors de son déplacement, le dispositif de commande comportant des moyens processeurs (74) et des moyens logiques de décodage (100) des signaux émis par lesdits moyens émetteurs (40, 42) et étant caractérisé en ce qu'il comprend:

une unité de chronologie (92) programmable, contrôlée par les moyens processeurs (74) et en ce que.

les moyens processeurs programmables (74) comportent au moins une première et une seconde entrées d'interruption,

les moyens logiques de décodage (100), en réponse à chaque signal émis par lesdits moyens émetteurs (40, 42), appliquent un signal d'interruption à la première entrée d'interruption des moyens processeurs (74), et

les moyens processeurs (74) sont programmés pour que, en réponse à un signal d'interruption reçu sur leur première entrée d'interruption, ils émettent des signaux d'actionnement sur l'unité (92) de chronologie pour qu'elle délivre, après un laps de temps prédéterminé, un signal sur la deuxième entré d'interruption des moyens processeurs (74) et pour que, en réponse à un signal d'interruption reçu sur leur deuxième entrée d'interruption, ils émettent des signaux de commande sélective des éléments d'impression.

2. Dispositif selon la revendication 1, caractérisé en ce que l'unité de chronologie contrôle un moteur qui commande le déplacement de la tête d'impression.

3. Dispositif selon l'une des revendications 1 ou 2, caractérisé en ce que les moyens logiques de décodage reçoivent en outre des signaux de commande (DE) émis par les moyens processeurs, l'état de ces signaux de commande étant défini par la valeur des signaux émis par lesdits moyens émetteurs et en ce que les moyens logiques de décodage délivrent un signal d'interruption toutes le fois qu'un signal, indiquant que la tête d'impression s'est déplacée d'un pas, est émis par lesdits moyens émetteurs, les moyens processeurs, en réponse à ce signal d'interruption, modifiant l'état du signal de commande de telle sorte que les moyens logiques de décodage génèrent des signaux d'interruption ultérieurs lors de l'apparition de signaux ultérieurs émis par les moyens émetteurs.

4. Dispositif de commande selon la revendication 3, caractérisé en ce que lesdits moyens logiques de décodage (100) appliquant ledit signal d'interruption, comprennent des circuits OU exclusif (112, 114), qui reçoivent le signal émis par les moyens émetteurs et le signal de commande, ces circuits OU exclusif délivrant ledit signal d'interruption chaque fois que le signal émis par les moyens émetteurs change et en ce que lesdits moyens processeurs, on réponse à ce signal d'interruption commandent une modification correspondante du signal de commande pour conditionner les circuits OU exclusif de telle sorte que ces circuits OU exclusif puissent délivrer des signaux d'interruption ultérieurs pour tout nouveau changement du signal émis par le moyen émetteur.

5. Dispositif de commande selon l'une quelconque des revendications précédentes, caractérisé en ce que ladite tête d'impression peut se déplacer dans deux directions opposées et en ce que l'unité de chronologie est programmée pour délivrer des signaux de commande sélective de telle façon que les éléments d'impression impriment le milieu d'enregistrement en un point qui est indépendant de la direction du mouvement de la tête d'impression.

6. Dispositif selon la revendication 5, caractérisé en ce que les éléments d'impression peuvent être actionnés pour plusieurs positions désirées, ces dernières étant situées entre chaque pas successif et en ce que l'unité de chronologie comporte plusieurs étages, chaque étage correspondant à une dite position et étant programmé par lesdits moyens processeurs en réponse à chacun des signaux émis par les moyens émetteurs.

7. Dispositif selon la revendication 6, caractérisé en ce que l'unité de chronologie comporte un étage supplémentaire pour contrôler la vitesse de déplacement de la tête d'impression.

**Patentansprüche**

1. Drucksteuervorrichtung mit einem Drahtmatrix-Druckkopf (22), der sich vor einem Aufzeichnungstraeger (32) bewegt, wo die Drahtmatrix mehrere bei einer Bewegung des Druckkopfes (22) betaetigbare Druckdrahte Aufweist, wo jeder Draht, wenn er betaetigt ist, ein Band gegen den Aufzeichnungstraeger (32) zum Abdruck eines Zeichens bringt, wobei das Druckwerk ausserdem Drucksignalgeber (40, 42) aufweist, entlang denen der Druckkopf (22) sich bewegt, wobei die Signalgeber ein Signal fuer jeden progressiven von dem Druckkopf (22) in Bewegung gelaufenen Schritt abgeben die Steuervorrichtung Prozessormittel (74) und logische Code-Umsetzer (100) fuer die von dem Signalgebern (40, 42) stammenden Signalen, dadurch gekennzeichnet, dass die Drucksteuervorrichtung aufweist:

eine programmierbare von den Prozessormittel (74) gesteuerte taktgebende Einrichtung (92), und dass,
die programmierbaren Prozessormittel (74) mindestens einen ersten und einen zweiten Interrupt-Eingang aufweisen,
die logischen Code-Umsetzer (100) im Ansprechen auf jedes von den Signalgebern (40, 42) abgegebene Signal dem ersten Interrupt-Eingang der Prozessormittel (74) ein Interrupt-Signal zuzufuehren,
die Prozessormittel (74) dazu programmiert sind, dass sie im Ansprechen auf einem an dem ersten Interrupt-Eingang vorliegenden Interrupt-Signal Treibsignale fuer die taktgebende Einrichtung (92) zufuehren, so dass sie dem zweiten Interrupt-Eingang der Prozessormittel (74) nach einer vorbestimmten Zeitspanne ein Signal zufuehrt, und die Prozessormittel im Ansprechen auf ein an dem zweiten Interrupt-Eingang vorliegendes Interruptsignal Signale fuer die wahlweise Ansteuerung der Druckelemente abgeben.

2. Drucksteuervorrichtung nach Anspruch 1, dadurch gekennzeichnet, dass die taktgebende Einrichtung einen Motor zum Antrieb des Druckkopfes steuert.

3. Drucksteuervorrichtung nach einem der Ansprueche 1 oder 2, dadurch gekennzeichnet, dass ausserdem den logischen Code-Umsetzern aus den Prozessorenmitteln stammende Steuersignale (CE) zugefuehrt sind, wobei der Zustand dieser Steuersignale dem Wert der aus den Prozessormitteln stammenden Signale entspricht, und die logischen Code-Umsetzer ein Interrupt-Signal bei jeder Abgabe eines aus den Signalgebern stammenden Signals zu Angabe, dass der Druckkopf einen Schritte gegangen ist, senden, wobei die Prozessormittel im Ansprechen auf dieses Interrupt-Signal den Zustand des steuersignals so aendern, dass die logischen Code-Umsetzer nachfolgende Interrupt-Signale bei Auftritt der nachfolgenden von den Signalgebern gesandten Interrupt-Signale erzeugen.

4. Drucksteuervorrichtung nach Anspruch 3, dadurch gekennzeichnet, dass die logischen das Interrupt-Signal abgebenden Code-Umsetzer (100) Antivalenzglieder (112, 114) aufweisen, die das von den Signalgebern gesandte Signal und das Steuersignal erhalten, wobei diese Antivalenzglieder ein Interrupt-Signal bei jeder Aenderung des aus den Signalgebern stammenden Signals gibt, und die Prozessormittel im Ansprechen auf diese Interruptsignal eine entsprechende Aenderung des Steuersignals zur derartigen Verknuepfung der Antivalenzglieder steuern, dass diese Antivalenzglieder nachfolgende Interrupt-Signale bei jeder neuen Aenderung des aus dem Signalgeber gesandten Signals abgeben koennen.

5. Drucksteuervorrichtung nach einem der vorhergehenden Ansprueche, dadurch gekennzeichnet, dass sich der Druckkopf in zwei entgegengesetzten Richtungen bewegen kann, die taktgebende Einrichtung zur Abgabe von Signalen fuer eine wahlweise Steuerung programmiert ist, so dass die Druckelement an einem von der Bewegungsrichtung des Druckkopfes abhaengigen Punkt den Aufzeichnungstraeger aufdrucken.

6. Drucksteuervorrichtung nach Anspruch 5, dadurch gekennziechnet, dass die Druckelemente fuer mehrere erwuenschte Druckpositionen betaetigt werden koennen, wobei die letzteren zwischen jeden aufeinanderfolgenden Schritte liegen, und die taktgebende Einrichtung mehrere Stufen aufweist, wobei jede Stufe einer bestimmten Druckposition entspricht und von den Prozessormitteln im Anspruchen auf jedes aus den Signalgebern stammende Signal programmiert ist.

7. Drucksteuervorrichtung nach Anspruch 6, dadurch gekennzeichnet, dass die taktgebende Einrichtung eine zusaetzliche Stufe zur Steuerunge der Bewegungsgeschwindigkeit des Druckkopfes aufweist.

**Claims**

1. Control means for a printer having a wire matrix print head (22) which moves across a record medium (32), the wire matrix comprising a plurality of print wires which can be actuated when head (22) is moving, each wire, when it is actuated, applying a ribbon (30) against said record medium (32) to print a mark thereon said printer further comprising print emitter means (40, 42) swept by print head (22), said emitter means (40, 42) providing a signal for each successive step of print head (22) moving along said emitter means, the control means comprising processor means (74) and logic means (100) for decoding the signals emitted by said emitter means (40, 42) and being characterized in that it includes:

a programmable timing unit (92) controlled by processor means (74) and in that,
programmable processor means (74) comprise at least a first and a second interrupt input,
logic decoding means (100) responsive to each signal emitted by said emitter means (40, 42), apply an interrupt signal to the first interrupt input of processor means (74), and
processor means (74) are programmed so that, in response to an interrupt signal received on the first interrupt input thereof, they emit signals actuating timing unit (92) so that said timing unit delivers, after a predetermined period of time, a signal onto the second interrupt input of processor means (74) and so that, in response to an interrupt signal received on the second interrupt input thereof, they provide signals for selectively controlling the pring elements.

2. Control means according to claim 1 characterized in that the timing unit controls a motor which controls the pring head movement.

3. Control means according to claim 1 or 2 characterized in that the decoding logic means further receive control signals (CE) provided by the processor means, the state of said control signals being defined by the value of the signals provided by said emitter means and in that the decoding logic means provide an interrupt signal each time a signal indicating that the print head has moved over one step, is provided by said emitter means, the processor means in response to said interrupt signal, modifying the state of the control signal so that the decoding logic means provide subsequent interrupt signal upon the occurrence of subsequent signals provided by the emitter means.

4. Control means according to claim 3 characterized in that said decoding logic means (100) applying said interrupt signal, include exclusive OR circuits (112, 114) receiving the signal provided by the emitter means and the control signal, said exclusive OR circuits providing said interrupt signal each time the signal provided by the emitter means, changes and in that said processor means, in response to said interrupt signal, control a corresponding change of the control signal for setting the exclusive OR circuits so that said exclusive OR circuits can provide subsequent interrupt interrupt signals for any new change of the signal provided by the emitter means.

5. Control means according to any one of the above claims characterized in that said print head can move in either one of two opposite directions and in that the timing unit is programmed to provide selective control signals so that the print elements print the record medium in a location independant of the print head direction of movement.

6. Control means according to claim 5 characterized in that the print elements can be actuated for a plurality of desired positions which are located between each successive step and in that the timing unit comprises several stages, each stage corresponding to one of said positions and being programmed by said processor means in response to each signal provided by the emitter means.

7. Control means according to claim 6 characterized in that the timing unit comprises an additional stage to control the print head velocity.

# FIG. 1

FIG. 2

FIG. 3

FIG. 4

FIG. 5

FIG. 6

FIG. 7